# EUROPÄISCHE PATENTSCHRIFT

(11) **EP 1 362 721 B1**
(45) Veröffentlichungstag und Bekanntmachung des Hinweises auf die Patenterteilung: **05.07.2006**
(21) Anmeldenummer: 03008207.7
(22) Anmeldetag: 08.04.2003
(51) Int. Cl.: B60G 21/055, B60G 17/015

(54) **Regelsystem für ein Kraftfahrzeug mit Wankstabilisierung**
Control system for a motor car with roll stabilization
Système de contrôle pour un véhicule automobile avec stabilisation du roulis

(30) Priorität: 16.05.2002 DE 10221716
(43) Veröffentlichungstag der Anmeldung: 19.11.2003
(73) Patentinhaber: Bayerische Motoren Werke Aktiengesellschaft, 80809 München (DE)
(72) Erfinder: Zimprich, Wolfgang, 85737 Ismaning (DE); Bloos, Felix, Dr., 81245 München (DE); Wey, Torsten, Dr., 47239 Duisburg (DE)

(56) Entgegenhaltungen:
- EP-A- 0 608 650
- WO-A-01/45982
- DE-A1- 19 846 275
- FR-A- 2 812 842
- US-A- 5 060 959
- US-A- 6 161 844
- US-B1- 6 354 607

## Beschreibung

Die Erfindung betrifft ein elektronisches Regelsystem für ein vierrädriges Kraftfahrzeug, insbesondere einen Personenkraftwagen, mit einer Wankstabilisierungs-Vorrichtung in Form geteilter, jeweils einer Fahrzeug-Achse zugeordneter Stabilisatoren, deren Stabilisatorhälften jeweils mittels eines vom Regelsystem unter Berücksichtigung der Querbeschleunigung und der Fahrgeschwindigkeit sowie des Lenkwinkels des Kraftfahrzeugs geeignet angesteuerten elektrischen Stellmotors gegeneinander verdrehbar sind, sowie mit den weiteren Merkmalen des Oberbegriffs der unabhängigen Ansprüche 1 bzw. 3. Zum bekannten Stand der Technik wird auf die DE 198 46 275 A1 verwiesen.

Eine Wankstabilisierung, d.h. eine Reduzierung der rotatorischen Fahrzeugbewegungen um die Fzg.-Längsachse hat eine wesentliche Verbesserung des Fahrverhaltens und des Fahrkomforts zur Folge. Aus der genannten Schrift sind sog. aktive Stabilisatoren in einem Fahrzeug-Fahrwerk bekannt. Dabei sind die Stabilisatoren der Vorderachse und der Hinterachse eines Kraftfahrzeugs bevorzugt mittig geteilt, wobei die so gebildeten Stabilisatorhälften einer Achse über einen Stellmotor miteinander verbunden sind, der diese "Hälften" gegeneinander tordieren bzw. verdrehen kann und somit insbesondere in einer Kurvenfahrt des Fahrzeugs ein einer daraus resultierenden Wankbewegung des Fzg.-Aufbaus entgegenwirkendes Moment in die Fahrzeug-Radaufhängung einleiten kann. Günstigstenfalls kann eine Wankbewegung des Fzg.-Aufbaus im Falle einer Kurvenfahrt vollständig unterbunden werden

Auf dem Markt befinden sich bereits Personenkraftwagen mit einer solchen Wankstabilisierungs-Vorrichtung, wobei der genannte Stellmotor ein Hydraulikmotor ist, dessen einander entgegenwirkende Hydraulikkammern durch geeignete Ansteuerung von Hydraulikventilen geeignet mit Druck beaufschlagt werden können, um das jeweils gewünschte Moment an die Stabilisatorhälften einer Fzg.-Achse anzulegen. Neben einem Hydraulikmotor kann als Stellmotor für einen sog. "aktiven Stabilisator" auch ein Elektromotor mit nachgeschaltetem Getriebe verwendet werden, wie dies in der genannten DE 198 46 275 A1 beschrieben ist. Ein elektrischer Stellmotor besitzt gegenüber einem hydraulischen Stellmotor diverse Vorteile, die in dieser Schrift aufgeführt sind, und kann gut direkt von einer elektronischen Steuereinheit angesteuert werden, die - analog den bisherigen hydraulischen Stellmotoren - im Hinblick auf eine gewünschte Wankstabilisierung bei Kurvenfahrt neben dem Fzg.-Lenkwinkel die aktuelle Querbeschleunigung sowie die Fzg.-Fahrgeschwindigkeit berücksichtigt, so wie dies auch in der DE 198 46 275 A1 angegeben ist.

Wegen des relativ starken Einflusses, den ein aktiver Stabilisator auf das Fahrverhalten des Kraftfahrzeugs haben kann, sollte das einen bzw. die aktiven Stabilisator(en) steuernde System auf bestmögliche Systemsicherheit hin ausgelegt sein. Für hydraulische Stellmotoren sind entsprechende hydraulische Schaltungen bspw. aus der EP 0 850 151 B1 bekannt.

Hiermit soll nun ein ausreichend sicheres elektronisches Regelsystem für die elektrischen Stellmotoren einer Wankstabilisierungsvorrichtung eines Kraftfahrzeugs nach dem Oberbegriff des Anspruchs 1 (= 3) aufgezeigt werden (= Aufgabe der vorliegenden Erfindung).
Die Lösung dieser Aufgabe ist durch die kennzeichnenden Merkmale der Ansprüche 1 oder 3 gekennzeichnet.

Zunächst ist analog dem bekannten Stand der Technik jedem Stellmotor eine Leistungselektronik mit einem Low-Level-Regler und einer Low-Level-Überwachungslogik zugeordnet, die über einen Datenbus mit einem High-Level-Steuergerät verbunden sind, das eine übergeordnete Regelung vornimmt und das für die Wankstablisierung erforderliche Stabilisierungsmoment geeignet auf die Vorderachse und Hinterachse des Fahrzeugs aufteilt sowie eine High-Level-Überwachungslogik enthält. Somit sind mehrere sog intelligente Instanzen vorhanden, denen jeweils konkrete Aufgaben zugewiesen sind, so dass man auch von einer "verteilten Intelligenz" sprechen kann. Ein zentrales Steuergerät kümmert sich insbesondere um die übergeordneten Funktionen und wird daher als High-Level-Steuergerät bezeichnet. So wird in diesem High-Level-Steuergerät das zur Wankstabilisierung insgesamt in das Fahrzeug-Fahrwerk über die beiden aktiven Stabilisatoren einzuleitende Moment ermittelt, und zwar wie grundsätzlich bekannt unter Berücksichtigung der Querbeschleunigung, der Fahrgeschwindigkeit und dem Lenkwinkel des Fahrzeugs, wobei selbstverständlich weitere Kenngrößen in diese Ermittlung mit eingehen können. Auch gilt es, dieses gesamte der Wankstabilisierung dienende Moment geeignet zwischen dem Stabilisator der Fahrzeug-Vorderachse und demjenigen der Fahrzeug-Hinterachse aufzuteilen, was unter Zugrundelegung geeigneter Kennlinien insbesondere in Abhängigkeit der Fahrgeschwindigkeit des Kfz's erfolgen kann. Auch diese übergreifende Aufgabe übernimmt das High-Level-Steuergerät.
Neben diesem ist jeder Stellmotor bzw. dessen an bzw. nahe diesem angeordnete Leistungselektronik mit einem sog. Low-Level-Regler versehen, der bevorzugt die detaillierte Regelung der Stellmotor-Bestromung bzw. - Positionierung entsprechend den Vorgaben aus dem High-Level-Steuergerät umsetzt. Dabei erfolgt eine Stromregelung (in einer inneren Regelschleife), wobei bevorzugt das vom Stellmotor abgegebene Moment und als Rückfallmodus eine vom Stellmotor einzustellende Winkelposition (jeweils in einer äußeren Regelschleife) eingestellt wird.

Weiterhin ist in jeder der genannten "intelligenten Instanzen" eine Überwachungsfunktion enthalten, die unter anderem auch auf die Kommunikation zwischen diesen Instanzen ausgerichtet ist. Diese Kommunikation zwischen den Low-Level-Reglern der Stabilisator-Stellmotoren und dem High-Level-Steuergerät erfolgt dabei im wesentlichen über einen Datenbus. Im High-Level-Steuergerät kann dann mittels einer sog. High-Level-Überwachungslogik neben der Kommunikation der Fahrzustand des Kraftfahrzeugs überwacht werden, ferner kann eine Plausibilisierung von Eingangssignalen erfolgen, wozu Sensorsignale mit einem Referenzmodell für die elektrischen Stellmotoren verglichen werden können. Ferner können allgemeine Bereichsverletzungen festgestellt werden, so bspw. hinsichtlich des einstellbaren Winkels an den Stellmotoren, hinsichtlich Über-Temperatur und vielem mehr. Eine in jedem Low-Level-Regler vorgesehene sog. Low-Level-Überwachungslogik kann Hardwarefehler in der Leistungselektronik und am Stellmotor erkennen, so bspw. defekte Sensoren, elektrische Überspannung, Ausfall der Endstufe, und weiteres mehr.

Wenn nun seitens der Überwachungslogik irgendwelche Fehler erkannt werden, die sich auf das Fahrverhalten des Kraftfahrzeugs negativ auswirken könnten, so empfiehlt es sich nicht nur, den Fahrer des Fahrzeugs hierauf aufmerksam zu machen, sondern zusätzlich kann das gesamte System in einen Sicherheitszustand oder dgl. überführt werden, in dem zumindest mit beherrschbaren bzw. üblichen Reaktionen des Fzg.-Fahrwerks gerechnet werden kann. Dieser Sicherheitszustand wird im weiteren als Safe-Modus bezeichnet und später noch ausführlicher erläutert. Tritt hingegen ein Fehler auf, der auf das Fahrverhalten praktisch keine Auswirkung hat, so kann es ausreichend sein, den Fahrer lediglich auf diesen Fehler hinzuweisen oder diesen Fehler für spätere Wartungsarbeiten geeignet zu speichern.

Neben einer ersten (Datenbus-)Verbindung zwischen dem High-Level-Steuergerät und der Leistungselektronik der Aktuatoren ist zur Erhöhung der Sicherheit erfindungsgemäß zwischen diesen sog. "intellegenten Instanzen" jeweils noch eine eigenständige Hardware-Enable-Leitung vorgesehen. Erkennt nämlich das High-Level-Steuergerät einen Fehler, so kann es durch einen entsprechenden low-Pegel auf den Hardware-Enable-Leitungen die jeweilige Leistungselektronik und damit den jeweiligen Aktuator in einen sog. Safe-Zustand schicken, bei welchem es sich um eine Sicherheitsschaltung handelt. Zur Sicherheit ist also neben einem lokalen Datenbus ein zweiter Abschaltweg in Form der beiden Hardware-Enable-Leitungen vorhanden.

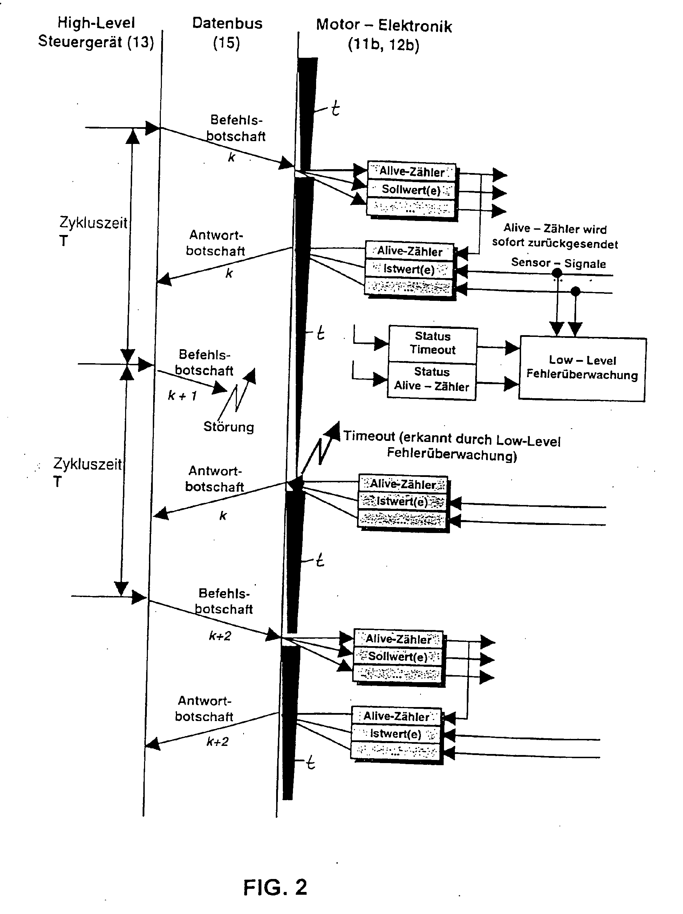

Ebenfalls erhöht wird die Systemsicherheit, wenn im elektronischen Regelsystem eine Überwachung hinsichtlich des Auftretens von Kommunikationsfehlern zwischen den verschiedenen sog. "intelligenten Instanzen" erfolgt. Hierfür kann ein lokaler Datenbus durch sein Protokoll gegen Übertragungsfehler (insbesondere eine Verfälschung der Nachricht auf dem Datenbus) gesichert sein. Die Überwachungslogik kann auch weitere Fehler wie das Fehlen einer Botschaft oder den mehrfachen Empfang derselben Botschaft zu erkennen. Bspw. ist die bekannte und grundsätzlich übliche sog. Timeout-Überwachung integriert sein, wonach jede Botschaft innerhalb einer bestimmten Frist empfangen werden muss. Vorgeschlagen wird ferner ein sog. Zeitstempel, auch "Alive-Zähler" genannt, der anhand der beigefügten Figur 2 und der zugehörigen Erläuterung an späterer Stelle erklärt wird.

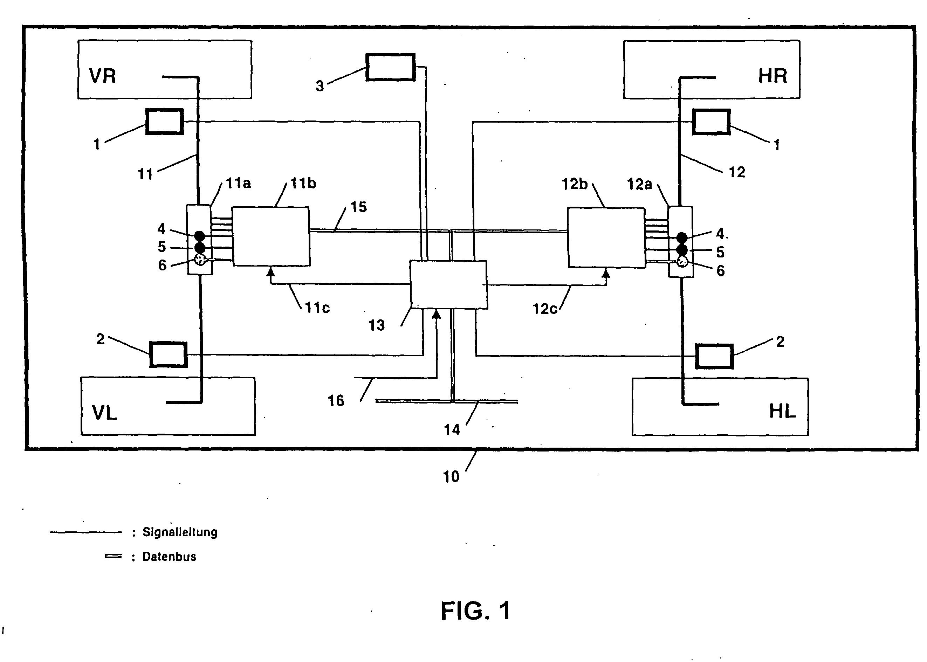

Zunächst jedoch wird der Aufbau eines bevorzugten Ausführungsbeispieles eines erfindungsgemäßen Regelsystems anhand der beigefügten **Figur 1** erläutert.

Dabei stellt der mit der Bezugsziffer 10 bezeichnete Rahmen ein Kraftfahrzeug in Draufsicht dar, das mit einem aktiven Stabilisator 11 für die Vorderachse sowie einem aktiven Stabilisator 12 für die Fzg.-Hinterachse versehen ist. Mit Ausnahme der vier Räder (VR = vorne rechts, HL = hinten links usw.) sind keine weiteren mechanischen Elemente des Fzg.-Fahrwerks dargestellt.

Jeder aktive Stabilisator 11 bzw. 12 ist - wie bekannt - geteilt mit einem zwischen den beiden jeweiligen Stabilisatorhälften angeordnetem Aktuator 11a bzw. 12a, der jeweils aus einem elektrischen Stellmotor, für den ebenfalls die Bezugsziffer 11a bzw. 12a verwendet wird, sowie aus einem diesem nachgeschalteten Getriebe (nicht dargestellt) besteht. Jeder Aktuator bzw. Stellmotor kann die zugehörigen Stabilisatorhälften gegeneinander tordieren bzw. verdrehen und somit in das Fahrwerk des Kfz ein Moment einleiten, das einer Wankbewegung bei einer Kurvenfahrt entgegenwirkt.

An bzw. neben jedem Stellmotor 11a, 12a ist eine Leistungselektronik 11b bzw. 12b vorgesehen, die den jeweiligen Stellmotor den Anforderungen entsprechend betätigt bzw. positioniert. Jeder Leistungselektronik 11b, 12b ist ein weiter oben erläuterter Low-Level-Regler mit integrierter Low-Level-Überwachungslogik zugeordnet. In welcher Weise die jeweiligen Stellmotoren 11a, 12a in Abhängigkeit aktueller Randbedingungen und dabei aufeinander abgestimmt betätigt werden, wird vom oben erläuterten sog. High-Level-Steuergerät 13 vorgegeben. Dieses erhält die zur Ermittlung des für eine gute Wankstabilisierung jeweils notwendigen Moments benötigten Angaben bzw. Informationen unter anderem über eine Verbindung mit einem geeigneten Datenbus 14 des Kraftfahrzeugs. Weitere Eingangsgrößen, die die übergeordnete Regelung des High-Level-Steuergeräts 13 verarbeitet, erhält dieses von einem Querbeschleunigungssensor 3 sowie von den einzelnen Rädern VR, HR, VL, HL zugeordneten Höhenstandsensoren 1 bzw. 2. Wie die Höhenstandsignale der Höhenstandsensoren 1, 2 der einzelnen Rädern im Hinblick auf eine geeignete Ansteuerung der aktiven Stabilisatoren 11 bzw. 12 verarbeitet werden können, ist dabei in einer weiteren deutschen Patentanmeldung der gleichen Annmelderin mit gleichem Anmeldetag und dem Titel "Kraftfahrzeug, insbesondere Personenkraftwagen, mit einer Wankstabilisierungs-Vorrichtung" beschrieben.

Für die Kommunikations-Verbindung zwischen dem High-Level-Steuergerät 13 und den Low-Level-Reglern in bzw. an den Stellmotoren bzw. Aktuatoren 11a, 12a ist ein Datenbus 15 (insbesondere CAN) vorgesehen. Hierüber erfolgt u.a. die Übertragung der Sollsignale und Istsignale für die Regelung der Aktuatoren 11a, 12a, sowie von Statusinformationen, wie bspw. Sensorausfall und ähnliches.

Neben dem Anschluss an den lokalen CAN-Datenbus 15 erhält die in der Leistungselektronik 11b bzw. 12b vorgesehene Low-Level-Überwachungslogik zur Ausübung ihrer weiter oben geschilderten Funktion Signale eines am jeweiligen Aktuator oder Stellmotor 11a bzw. 11b vorgesehenen Temperatursensors 4, eines Motorwinkel-Sensors 5, sowie eines sog. Indexsensors des dem Stellmotor nachgeschalteten, weiter oben bereits erwähnten (nicht dargestellten) Getriebes im jeweiligen Aktuator 11a bzw. 11b, wobei diverse dieser Signale lediglich an den lokalen Datenbus 15 zur Weiterleitung an das High-Level-Steuergerät 13 übergeben werden.

Neben der Datenbus-Verbindung zwischen dem High-Level-Steuergerät 13 und der Leistungselektronik 11b bzw. 12b der Aktuatoren 11a bzw. 12a ist zwischen diesen sog. "intellegenten Instanzen" jeweils noch eine eigenständige Hardware-Enable-Leitung 11c bzw. 12c vorgesehen. Erkennt nämlich das High-Level-Steuergerät 13 einen Fehler, so kann es durch einen entsprechenden low-Pegel auf den Hardware-Enable-Leitungen 11c, 12c die jeweilige Leistungselektronik und damit den jeweiligen Aktuator 11a bzw. 11b unabhängig vom CAN-Datenbus 15 in den sog. Safe-Zustand schicken, bei welchem es sich um eine Sicherheitsschaltung handelt. Zur Sicherheit ist also neben dem lokalen Datenbus 15 ein zweiter Abschaltweg in Form der beiden Hardware-Enable-Leitungen 11c, 12c vorhanden. Eine Reaktivierung der Leistungselektronik (nämlich die Rückkehr vom Fail-Safe-Modus in den Regelungsbereich) kann ebenfalls über die Hardware-Enable-Leitung 11c, 12c erfolgen, wobei dann eine steigende Flanke das entsprechende Kriterium ist. Alternativ ist bei fehlerfreier Funktion des Systems auch eine Reaktivierung über den Datenbus möglich.

Was den soeben genannten Fail-Safe-Modus betrifft, so wird im Fail-Safe-Fall (wenn also ein mehr oder weniger schwerwiegender Fehler festgestellt wurde und das Gesamtsystem in einen sicheren Betriebszustand überführt werden soll) jeder Stellmotor 11a bzw. 12a von der Leistungsendstufe der zugehörigen Leistungselektronik 11b bzw. 12b getrennt und über einen definierten Lastwiderstand kurzgeschlossen. Auf diese Weise wird eine bestimmte Dämpfungskonstante erreicht, die ein Reststabilisierungsvermögen für den dann vorliegenden Fall eines passiven Wankstabilisierungssystems bietet, und im Fail-Safe-Modus während einer Kurvenfahrt des Fahrzeugs auch ein hinreichend kurzes Wiederaufrichten der Karosserie nach Ende der Kurve zulässt. Im übrigen kann dabei eingestellt werden, dass die Vorderachse ein höheres Stabilisierungsmoment erfährt als die Hinterachse und daher ein tendenziell untersteuerndes Verhalten des Fahrzeugs vorliegt. Insgesamt handelt es sich somit beim beschriebenen Regelsystem um einen Regler mit Normalmodus und mit Rückfallmodus.

Weiterhin erfolgt im elektronischen Regelsystem eine Überwachung hinsichtlich des Auftretens von Kommunikationsfehlern zwischen den verschiedenen sog. "intelligenten Instanzen". So ist der lokale CAN-Datenbus 15 durch sein Protokoll gegen Übertragungsfehler (insbesondere eine Verfälschung der Nachricht auf dem Datenbus) gesichert. Die vorgestellte Überwachungslogik ist auch dazu geeignet, weitere Fehler wie das Fehlen einer Botschaft oder den mehrfachen Empfang derselben Botschaft zu erkennen. Bspw. ist die bekannte und grundsätzlich übliche sog. Timeout-Überwachung integriert, wonach jede Botschaft innerhalb einer bestimmten Frist empfangen werden muss.

Umgesetzt ist weiterhin ein sog. Zeitstempel, auch "Alive-Zähler" genannt, der im folgenden anhand der beigefügten **Figur 2** erläutert wird. In Vertikalrichtung ist dabei die Zeitachse (von oben nach unten) aufgetragen und nebeneinander ist der Kommunikations-Port des High-Level-Steuergeräts 13, der lokale CAN-Datenbus 15 und daneben der Kommunikations-Port des Low-Level-Reglers bzw. der Low-Level-Überwachungslogik in der Leistungselektronik 11b bzw. 12b des jeweiligen Aktuators oder Stellmotors 11a bzw. 12a dargestellt.

Wie erwähnt wird nun jeder vom High-Level-Steuergerät 13 ausgehenden Befehlsbotschaft ein Zeitstempel in Form eines Modulo-Zählers beigefügt. Dieser wird mit jeder versendeten Botschaft inkrementiert (vgl. beigefügte **Figur 2,** sog. Alive-Zähler, Indizes *"k", "k+1", "k*+*2"*). Beim Empfang der Botschaft sendet die Leistungselektronik 11a bzw. 11b diesen Zählerstand identisch zurück. Die nächste Befehlsbotschaft erhält demzufolge das Inkrement (k + 1).

Durch die ankommende Befehlsbotschaft wird dabei in der Leistungselektronik ein Timer gestartet, der dazu geeignet ist, das rechtzeitige Eintreffen der nächsten Befehlsbotschaft zu überwachen. Der Timer ist in der **Figur 2** durch einen mit fortschreitender Zeit (d.h. nach unten) schmäler werdenden Keil angedeutet und mit dem Buchstaben "t" versehen.

Geht beispielsweise - wie bei der Befehlsbotschaft *"k*+*1"* dargestellt - eine Botschaft verloren, so läuft der genannte Timer ab und löst in der Low-Level-Überwachungslogik geeignete Reaktionen aus.
Bei Ablauf des Timers t sendet die Leistungselektronik eine Antwortbotschaft an das High-Level-Steuergerät, die den letzten gültig empfangenen Wert des Alive-Zählers enthält, im Beispiel-Fall nach **Fig.2** also den Wert "k". Zudem wird der Timer t neu gestartet.

Durch die Überwachung all dieser Signale kann die jeweilige Leistungselektronik 11b bzw. 12b erkennen, ob alle Befehlsbotschaften des High-Level-Steuergeräts 13 bei ihr angekommen sind und gleichzeitig erkennt das High-Level-Steuergerät 13, ob die jeweilige Leistungselektronik 11b bzw. 12b alle Datenpakete wunschgemäß empfangen hat.

Im übrigen kann noch eine ähnliche Erkennung bezüglich eines Leitungsbruchs der bereits erläuterten Hardware-Enable-Leitung 11c bzw. 12c vorgesehen sein, wonach bspw. jede Leistungselektronik 11b bzw. 12b den auf ihrer Hardware-Enable-Leitung 11c bzw. 12c empfangenen logischen Zustand über den lokalen Datenbus 15 an das High-Level-Seuergerät 13 zurücksendet, jedoch kann dies sowie eine Vielzahl weiterer Details durchaus abweichend von obigen Erläuterungen gestaltet sein, ohne den Inhalt der Patentansprüche zu verlassen.

## Patentansprüche

1. Elektronisches Regelsystem für ein vierrädriges Kraftfahrzeug, insbesondere einen Personenkraftwagen, mit einer Wankstabilisierungs-Vorrichtung in Form geteilter, jeweils einer Fahrzeug-Achse zugeordneter Stabilisatoren (11, 12), deren Stabilisatorhälften jeweils mittels eines vom Regelsystem unter Berücksichtigung der Querbeschleunigung und der Fahrgeschwindigkeit sowie des Lenkwinkels der Kraftfahrzeugs geeignet angesteuerten elektrischen Stellmotors (11a, 12a) gegeneinander verdrehbar sind, wobei jedem Stellmotor (11a, 12a) eine Leistungselektronik (11b, 12b) mit einem Low-Level-Regler und einer Low-Level-Überwachungslogik zugeordnet ist, die über einen Datenbus (15) mit einem High-Level-Steuergerät (13) verbunden sind, das eine übergeordnete Regelung vornimmt und das für die Wankstablisierung erforderliche Stabilisierungsmoment geeignet auf die Vorderachse und Hinterachse des Fahrzeugs aufteilt sowie eine High-Level-Überwachungslogik enthält,
**dadurch gekennzeichnet, dass** neben der Datenbus-Verbindung (15) zwischen dem High-Level-Steuergerät (13) und der Leistungselektronik (11b, 12b) der Stellmotoren (11a, 12a) jeweils eine eigenständige Hardware-Enable-Leitung (11c, 12c) vorgesehen ist.

2. Regelsystem nach Anspruch 1,
**dadurch gekennzeichnet, dass** eine Möglichkeit zum Überwachen des Signalpegels auf der Hardware-Enable-Leitung (11c, 12c) durch das High-Level-Steuergerät (13) vorgesehen ist.

3. Elektronisches Regelsystem für ein vierrädriges Kraftfahrzeug, insbesondere einen Personenkraftwagen, mit einer Wankstabilisierungs-Vorrichtung in Form geteilter, jeweils einer Fahrzeug-Achse zugeordneter Stabilisatoren (11, 12), deren Stabilisatorhälften jeweils mittels eines vom Regelsystem unter Berücksichtigung der Querbeschleunigung und der Fahrgeschwindigkeit sowie des Lenkwinkels der Kraftfahrzeugs geeignet angesteuerten elektrischen Stellmotors (11a, 12a) gegeneinander verdrehbar sind, wobei jedem Stellmotor (11a, 12a) eine Leistungselektronik (11b, 12b) mit einem Low-Level-Regler und einer Low-Level-Überwachungslogik zugeordnet ist, die über einen Datenbus (15) mit einem High-Level-Steuergerät (13) verbunden sind, das eine übergeordnete Regelung vornimmt und das für die Wankstablisierung erforderliche Stabilisierungsmoment geeignet auf die Vorderachse und Hinterachse des Fahrzeugs aufteilt sowie eine High-Level-Überwachungslogik enthält,
**dadurch gekennzeichnet, dass** bei der Kommunikation zwischen dem High-Level-Steuergerät (13) und der Leistungselektronik (11b, 12b) jedes Stellmotors (11a, 12a) jeder Befehlsbotschaft ein sog. Alive-Zähler beigefügt wird, der seitens der Leistungselektronik an das High-Level-Steuergerät zurückgesandt wird, so dass dieses und die jeweilige Leistungselektronik erkennen kann, ob alle Datenpakte erfolgreich übertragen wurden, wobei die Leistungselektronik (11b, 12b) jeweils den letzten gültig empfangenen Alive-Zähler an das High-Level-Steuergerät (13) zurücksendet.

4. Regelsystem nach einem der vorangegangenen Ansprüche,
**dadurch gekennzeichnet, dass** in einem Safe-Modus jeder Stellmotor (11a, 12a) von der Leistungsendstufe der Leistungselektronik (11b, 12b) getrennt und über einen definierten Lastwiderstand kurzgeschlossen wird.

## Claims

1. An electronic control system for a four-wheeled motor vehicle, especially a passenger car, comprising a roll stabilisation device in the form of divided stabilisers (11, 12) associated with respective axles of the vehicle, each half-stabiliser being rotatable relative to the other half by an electronic servomotor (11a, 12a) suitably actuated by the control system with allowance for the transverse acceleration and the speed and steering angle of the vehicle, wherein each servomotor (11a, 12a) is associated with a power electronic unit (11b, 12b) comprising a low-level controller and a low-level monitoring logic and connected by a data bus (15) to a high-level command unit (13) which exerts overriding control and contains a high-level monitoring logic and suitably divides the torque required for roll stabilisation between the front axle and rear axle of the vehicle,
**characterised in that** a selective hardware enable line (11c, 12c) is provided in addition to the data bus connection (15) between the high-level command unit (13) and each power electronic unit (11b, 12b) of the servomotors (11a, 12a).

2. A control system according to claim 1, **characterised in that** a means is provided by the high-level command unit (13) for monitoring the signal level on the hardware enable line (11c, 12c).

3. An electronic control system for a four-wheeled motor vehicle, especially a passenger car, comprising a roll stabilisation device in the form of divided stabilisers (11, 12) associated with respective axles of the vehicle, each half-stabiliser being rotatable relative to the other half by an electronic servomotor (11a, 12a) suitably actuated by the control system with allowance for the transverse acceleration and the speed and steering angle of the vehicle, wherein each servomotor (11a, 12a) is associated with a power electronic unit (11b, 12b) comprising a low-level controller and a low-level monitoring logic and connected by a data bus (15) to a high-level command unit (13) which exerts overriding control and contains a high-level monitoring logic and suitably divides the torque required for roll stabilisation between the front axle and rear axle of the vehicle,
**characterised in that** during communication between the high-level command unit (13) and the power electronic unit (11b, 12b) of each servomotor (11a, 12a) each control message is accompanied by an "alive counter" which is retransmitted by the power electronic unit to the high-level command unit, so that the command unit and the respective power electronic unit can recognise whether all data packets have been successfully transmitted, wherein the power electronic units (11b, 12b) each retransmit the last correctly received alive counter to the high-level command unit (13).

4. A control system according to any of the preceding claims, **characterised in that** in a safe mode each servomotor (11a, 12a) is disconnected from the end stage of the power electronic unit (11b, 12b) and short-circuited across a defined load resistance.

## Revendications

1. Système de régulation électronique pour un véhicule automobile à quatre roues, en particulier une voiture particulière, comprenant un dispositif de stabilisation du roulis sous la forme de stabilisateurs (11, 12) séparés et associés à chaque fois à un essieu du véhicule, les moitiés de ces stabilisateurs pouvant à chaque fois tourner l'une par rapport à l'autre au moyen d'un servomoteur électrique (11a, 12a) actionné de manière appropriée par le système de régulation en prenant en considération l'accélération transversale et la vitesse de roulage ainsi que l'angle de braquage du véhicule automobile, une électronique de puissance (11b, 12b) associée à chaque servomoteur (11a, 12a) étant dotée d'un régulateur de bas niveau et d'une logique de surveillance de bas niveau qui sont reliés, par un bus de données (15), à un calculateur de haut niveau (13) qui effectue une régulation maître et distribue le couple de stabilisation nécessaire à la stabilisation du roulis de manière appropriée sur l'essieu avant et l'essieu arrière du véhicule, et qui contient une logique de surveillance de haut niveau,
**caractérisé en ce que**
outre la liaison par bus de données (15) entre le calculateur de haut niveau (13) et l'électronique de puissance (11b, 12b) des servomoteurs (11a, 12a), il est prévu à chaque fois une ligne d'activation matérielle (11c, 12c) autonome.

2. Système de régulation selon la revendication 1,
**caractérisé par**
une possibilité de surveiller le niveau de signal sur la ligne d'activation matérielle (11c, 12c) par le calculateur de haut niveau (13).

3. Système de régulation électronique pour un véhicule automobile à quatre roues, en particulier une voiture particulière, comprenant un dispositif de stabilisation du roulis sous la forme de stabilisateurs (11, 12) séparés et associés à chaque fois à un essieu du véhicule, les moitiés de ces stabilisateurs pouvant à chaque fois tourner l'une par rapport à l'autre au moyen d'un servomoteur électrique (11a, 12a) actionné de manière appropriée par le système de régulation en prenant en considération l'accélération transversale et la vitesse de roulage ainsi que l'angle de braquage du véhicule automobile, une électronique de puissance (11b, 12b) associée à chaque servomoteur (11a, 12a) étant dotée d'un régulateur de bas niveau et d'une logique de surveillance de bas niveau qui sont reliés, par un bus de données (15), à un calculateur de haut niveau (13) qui effectue une régulation maître et distribue le couple de stabilisation nécessaire à la stabilisation du roulis de manière appropriée sur l'essieu avant et l'essieu arrière du véhicule, et qui contient une logique de surveillance de haut niveau,
**caractérisé en ce que**
pendant la communication entre le calculateur de haut niveau (13) et l'électronique de puissance (11b, 12b) de chaque servomoteur (11a, 12a), un compteur dit sous tension est annexé à chaque message d'instruction et renvoyé, du côté de l'électronique de puissance, au calculateur de haut niveau de telle sorte que celui-ci et l'électronique de puissance respective puissent détecter si tous les paquets de données ont été transmis avec succès, l'électronique de puissance (11b, 12b) renvoyant à chaque fois au calculateur de haut niveau (13) le dernier compteur sous tension valable reçu.

4. Système de régulation selon l'une des revendications précédentes,
**caractérisé en ce que**
dans un mode de sécurité, chaque servomoteur (11a, 12a) est séparé de l'étage de sortie de l'électronique de puissance (11b, 12b) et mis en court-circuit par une résistance de charge définie.
